Europäisches Patentamt

European Patent Office

Office européen des brevets

(11) Numéro de publication: **0 180 528**
**A2**

(12) **DEMANDE DE BREVET EUROPEEN**

(21) Numéro de dépôt: 85420183.7

(22) Date de dépôt: 18.10.85

(51) Int. Cl.⁴: **G 01 N 21/07**

(30) Priorité: 26.10.84 FR 8416447

(43) Date de publication de la demande: 07.05.86
Bulletin 86/19

(84) Etats contractants désignés: **AT BE CH DE GB IT LI LU NL SE**

(71) Demandeur: **Guigan, Jean, 9, rue Jean Mermoz, F-75008 Paris (FR)**

(72) Inventeur: **Guigan, Jean, 9, rue Jean Mermoz, F-75008 Paris (FR)**

(74) Mandataire: **Laurent, Michel et al, 20 rue Louis Chirpaz Boîte postale no. 32, F-69131 Ecully Cedex (FR)**

(54) **Procédé destiné à réaliser l'analyse médicale d'un échantillon liquide à l'aide d'au moins un réactif liquide et dispositif pour la mise en oeuvre du procédé.**

(57) Procédé destiné à réaliser l'analyse médicale d'un échantillon liquide à l'aide d'au moins un réactif liquide et dispositif pour la mise en œuvre du procédé.

Procédé pour réaliser l'analyse médicale d'un échantillon liquide utilisant un boîtier (1) unitaire en matière plastique, compartimenté de manière à comporter une chambre de stockage (4) pour l'échantillon, une cellule calibrée (6), et des chambres de stockage (40, 50, 60) pour des réactifs liquides. Diverses centrifugations permettent de faire passer successivement l'échantillon et les réactifs dans une cuve d'analyse (11).

PROCEDE DESTINE A REALISER L'ANALYSE MEDICALE D'UN ECHAN-
TILLON LIQUIDE A L'AIDE D'AU MOINS UN REACTIF LIQUIDE ET
DISPOSITIF POUR LA MISE EN OEUVRE DU PROCEDE.

La présente invention concerne un procédé destiné à
réaliser l'analyse médicale d'un échantillon liquide d'au
moins un réactif liquide.

La présente invention a pour but de mettre en oeuvre
un procédé d'analyse d'une très faible dose d'échantillon liquide, de l'ordre de quelques microlitres. Ceci
est particulièrement intéressant dans le cas d'analyses
médicales car il devient possible, par exemple, d'éviter
aux patients de subir des prises de sang au moyen de seringues, et d'utiliser simplement quelques gouttes de
sang recueillies au bout d'un doigt.

Elle a également pour but de mettre au point un procédé permettant de réaliser toutes les analyses médicales
demandées jusqu'à présent (de l'ordre de trois cents),
au moyen de quatre réactifs différents au maximum.

Elle a pour but enfin de mettre en oeuvre un procédé bon marché et simple pour l'opérateur, qui se sert
de boitiers stockés contenant des réactifs liquides ;
ceci est rendu possible par le fait que les réactifs liquides possèdent un temps de conservation tout à fait
satisfaisant (de l'ordre de dix huit mois à deux ans).

La présente invention a pour objet un procédé destiné à réaliser l'analyse médicale d'un échantillon liquide à l'aide d'au moins un réactif liquide, remarquable notamment par le fait qu'il utilise un boitier compartimenté de façon à présenter :

- une chambre de stockage pour ledit échantillon liquide reliée par un conduit capillaire à une extrémité
d'une cellule calibrée dont l'autre extrémité est reliée
par un conduit capillaire à une chambre de trop-plein ;

- plusieurs chambres de stockage pour des réactifs
liquides disposées autour d'un déversoir, ledit déversoir étant relié respectivement par des conduits capillaires d'orientations diverses à ladite cellule calibrée et auxdites chambres de stockage de réactif, et communiquant par ailleurs avec une cuve d'analyse.

Ledit boitier est fermé par un couvercle muni d'une part d'un réceptacle de stockage d'échantillon communiquant directement avec ladite chambre de stockage d'échantillon et situé au-dessus d'elle, et d'autre part d'un bouchon amovible entrant dans ledit déversoir pour obturer les extrémités desdits conduits capillaires qui y aboutissent.

Des moyens sont prévus pour positionner ledit boitier sur le plateau d'une centrifugeuse selon plusieurs positions déterminées se déduisant l'une de l'autre par une rotation du boitier sur lui-même, par rapport au plateau selon un angle donné.

Selon ce procédé, on a disposé initialement des réactifs liquides respectivement dans lesdites chambres de stockage de réactif, on introduit ledit échantillon dans ledit réceptacle de stockage d'échantillon, ce dernier s'écoulant alors par gravité dans ladite chambre de stockage d'échantillon ; on enlève ledit bouchon, on met en place ledit boitier sur ledit plateau de la centrifugeuse en vue de réaliser successivement plusieurs centrifugations, la position angulaire du boitier étant à chaque fois choisie, parmi lesdites positions déterminées, en fonction de l'orientation du conduit capillaire concerné par rapport à la direction de la force centrifuge, de manière à faire passer successivement ledit échantillon de ladite chambre de stockage d'échantillon dans ladite cellule calibrée, puis de cette manière dans ledit déversoir et dans ladite cuve d'analyse, et ensuite chaque réactif de sa chambre de stockage dans ledit déversoir et ladite cuve d'analyse.

Selon un mode de réalisation particulièrement avantageux, lesdites positions déterminées du boitier se déduisent les unes des autres par des rotations de l'ordre de 90 et de 180°, correspondant sensiblement aux angles que font entre eux lesdits conduits capillaires aboutissant dans ledit déversoir.

La présente invention a également pour objet un dispositif pour la mise en oeuvre du procédé précité. Il s'agit d'un boitier cylindrique plat en matière plastique dont le diamètre est de l'ordre de trois centimètres et qui est compartimenté intérieurement de façon à présenter :

- une chambre de stockage pour ledit échantillon liquide reliée par un conduit capillaire à une extrémité d'une cellule calibrée dont l'autre extrémité est reliée par un conduit capillaire à une chambre de trop-plein ;

- plusieurs chambres de stockage pour des réactifs liquides disposées autour d'un déversoir, ledit déversoir étant relié respectivement par des conduits capillaires d'orientations diverses à ladite cellule calibrée et auxdites chambres de stockage de réactif, et communiquant par ailleurs avec une cuve d'analyse.

Ledit boitier constitue une pièce unitaire venue de moulage. Les conduits capillaires ont des diamètres de l'ordre de deux dizièmes de millimètre.

Le boitier est fermé par un couvercle en matière plastique muni d'un réceptacle de stockage d'échantillon communiquant directement avec ladite chambre de stockage d'échantillon et situé au-dessus d'elle. Le couvercle présente également une cheminée située au-dessus dudit déversoir et destinée à recevoir un bouchon susceptible d'obturer tous les orifices débouchant dans ledit déversoir. Cette cheminée ainsi que ledit réceptacle constituent avec le couvercle une pièce unitaire en matière plastique, l'ensemble étant venu du moulage.

Selon un mode de réalisation particulièrement avantageux, les conduits capillaires faisant communiquer ladite cellule calibrée et une chambre de stockage de réactif avec le déversoir sont parallèles entre eux. Les conduits capillaires faisant communiquer deux autres chambres de stockage de réactif avec le déversoir sont diamètralement opposés par rapport au déversoir et font un angle sensiblement égal à 90° avec les deux conduits capillaires précités.

Ledit déversoir comporte avantageusement des nervures internes formant déflecteurs permettant d'éviter qu'un réactif chassé d'une chambre de stockage ne pénètre dans une autre chambre de stockage.

D'autres caractéristiques et avantages de l'invention apparaîtront au cours de la description d'un mode de réalisation d'un dispositif permettant la mise en oeuvre du procédé selon l'invention. Dans le dessin annexé :

- la figure 1 est une vue de dessus du boitier sans son couvercle ;

- les figures 2 à 8 sont respectivement des coupes selon les lignes II-II à VIII-VIII de la figure 1 ;

- les figures 9 à 20 montrent schématiquement les diverses positions du boitier contenant son échantillon et ses réactifs pendant les différentes phases du procédé selon l'invention.

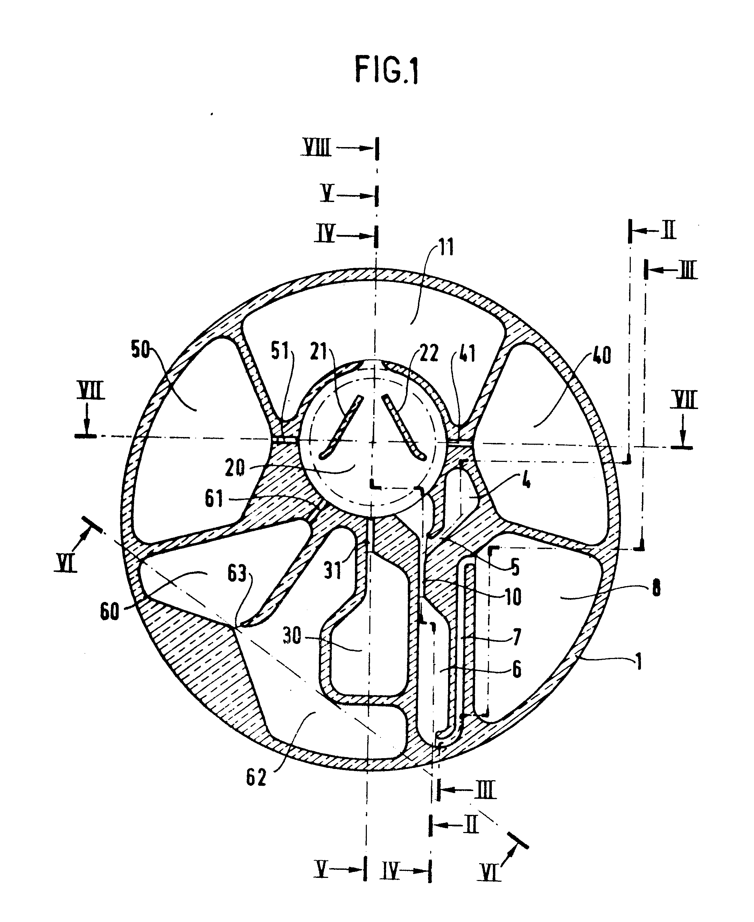

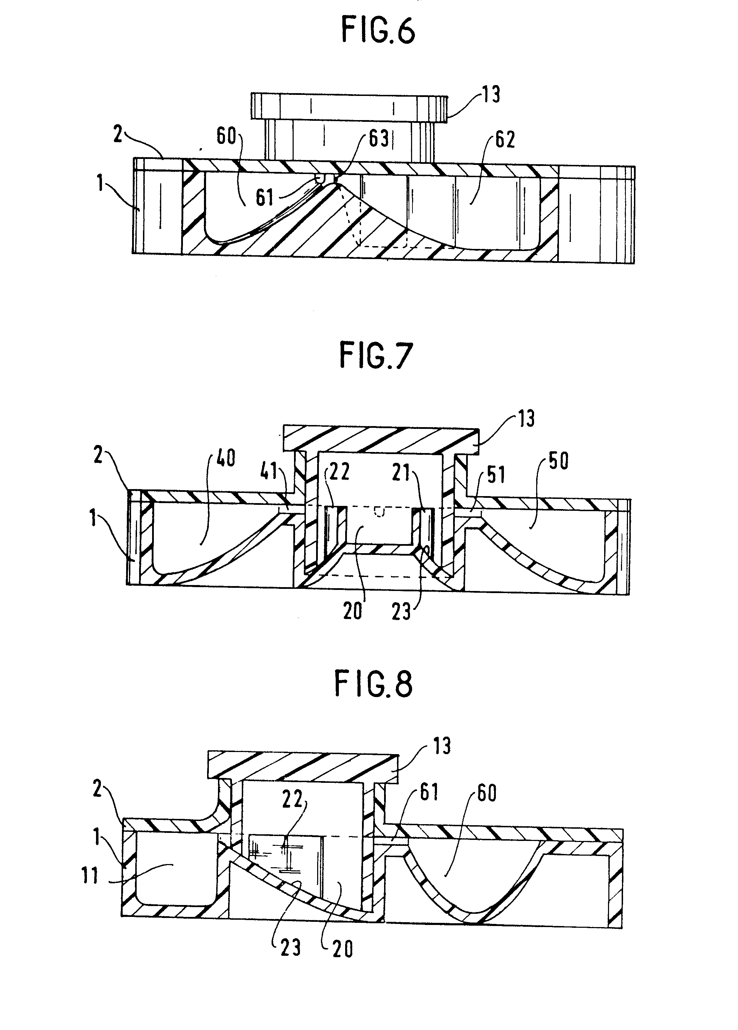

On voit dans les figures 1 à 8 un boitier (1) en matière plastique de forme générale cylindrique et plate, fermé par un couvercle (2) en matière plastique. A titre d'exemple, le boitier a un diamètre de l'ordre de trois centimètres.

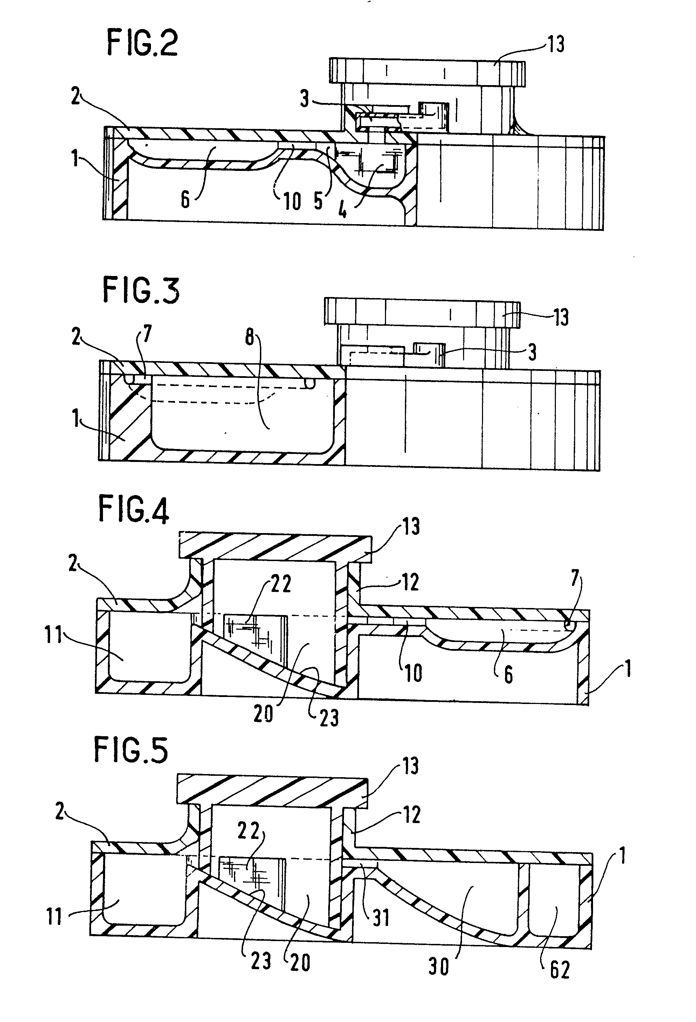

Les figures 1 et 2 montrent que la partie supérieure du couvercle (2) porte un réceptacle de stockage (3) pour un échantillon liquide communicuant directement avec une chambre (4) de stockage d'échantillon intérieure au boitier.

La chambre de stockage (4) est reliée par un conduit capillaire (5) à une cellule calibrée (6) communiquant par un conduit capillaire (7) avec une chambre de trop-plein (8), et par un conduit capillaire (10) avec un déversoir (20). Ce dernier, muni de nervures déflectrices (21) et (22), communique avec une cuve d'analyse (11) au niveau de la partie supérieure d'une paroi commune (23).

Le boitier comporte en outre une pluralité de chambres de stockage pour des réactifs liquides, telles que la chambre (30) qui communique avec le déversoir (20) par l'intermédiaire d'un conduit capillaire (31). On peut remarquer ici que les conduits capillaires (10) et (31) sont sensiblement parallèles entre eux. On a référencé (40) et (50) deux autres chambres de stockage de réactif communiquant avec le déversoir (20) respectivement par deux conduits capillaires (41) et (51), diamétralement opposés par rapport au déversoir, et orientés sensiblement à 90° par rapport aux conduits capillaires (10) et (31).

Enfin, il est prévu une quatrième chambre de stockage de réactif formée de deux alvéoles (60) et (62), communiquant entre eux par un orifice (63) ; seul l'alvéole (60) communique avec le déversoir (20) par un conduit capillaire (61). Ce dernier a une direction faisant sensiblement un angle de 45° avec les conduits (10,31,41,51).

Le couvercle (2) porte au-dessus du déversoir (20) une cheminée (12) susceptible de recevoir un bouchon (13). Pendant toute la durée de conservation du boitier muni de ses réactifs, le bouchon (13) a pour fonction d'obturer tous les orifices débouchant dans le dévervoir (20) (conduits capillaires 31,41,51,61, notamment).

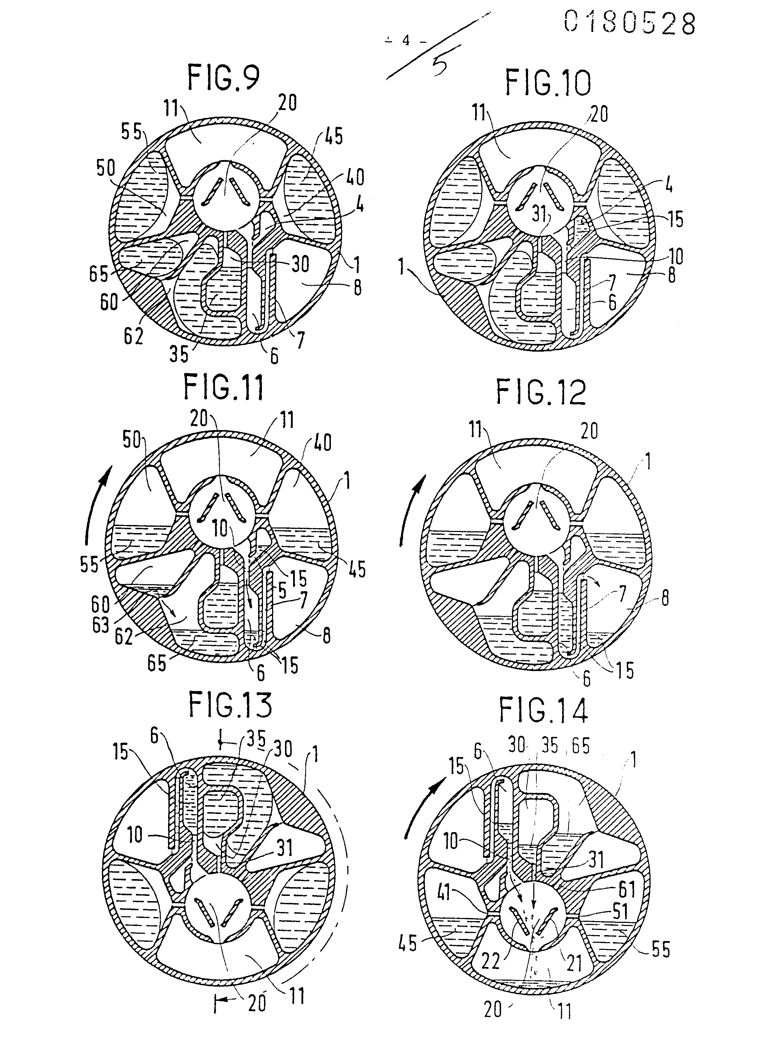

Les figures 9 à 20 montrent en vue de dessus le dispositif des figures 1 à 8 pendant la mise en oeuvre du procédé selon l'invention.

La figure 9 illustre la phase initiale, lorsque les chambres (30,40,50,60 et 62) du boitier (1) ont reçu respectivement des réactifs (35,45,55,65).

On dispose alors le boitier (1) sur le plateau d'une centrifugeuse. On imagine que l'on peut disposer simulténament une douzaine au moins de tels boitiers suivant un cercle sur ledit plateau.

Le centre de rotation du plateau est situé de manière que l'extrémité de la cellule (6) correspondant au conduit capillaire (7) en soit plus éloignée que l'extrémité correspondant au conduit capillaire (10). La direction de la force centrifuge est sensiblement celle des conduits capillaires (10) et (31).

A ce moment, le bouchon (13) est enlevé et une goutte d'échantillon (15) de quelques microlitres est introduit dans le réceptacle (3). L'échantillon (15) aboutit dans la chambre de stockage (4) (voir figure 10).

On réalise alors une première centrifugation dont on a illustré une phase intermédiaire (figure 11) et la phase finale (figure 12). Les réactifs restent stockés dans leurs chambres respectives mais l'échantillon (15) passe dans la cellule calibrée (6) et le conduit capillaire (7). Lorsque la cellule calibrée (6) est remplie d'échantillon (15), l'excédent aboutit dans la chambre de trop-plein (8).

On réalise ensuite une rotation à 180° du boitier sur lui-même (voir figure 13) ; les conduits capillaires (10) et (31) sont donc encore parallèles à la direction de la force centrifuge.

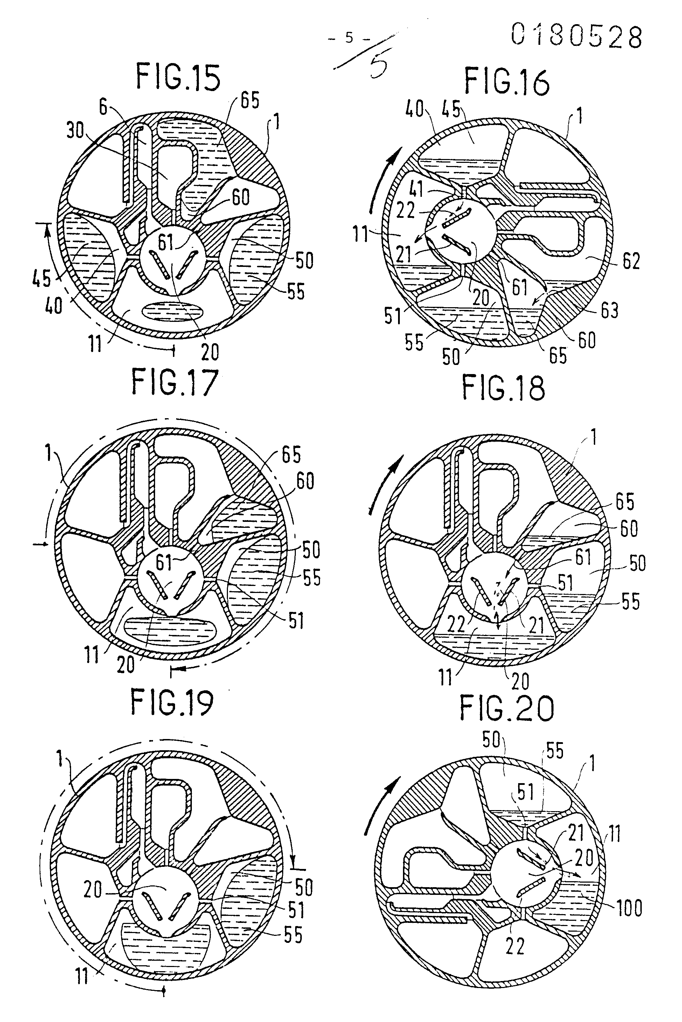

On opère une seconde centrifugation (voir figures 14 et 15) ; l'échantillon (15) passe par le conduit capillaire (10) dans le dévervoir (20) puis dans la cuve d'analyse (11). Simultanément le réactif (35) passe par le conduit capillaire (31) dans le déversoir (20) et la cuve (11). L'orientation vis-à-vis de la force centrifuge des conduits capillaires (41,51,61) est telle que les autres réactifs restent prisonniers dans leurs chambres de stockage respectives. La figure 15 montre le boitier au repos après la seconde centrifugation : la cellule (6) et le réservoir (30) sont vides. On remarque également que la première centrifugation (figures 11,12) a eu pour effet de faire passer tout le réactif (65) dans l'alvéole (62) qui n'a pas de communication avec le déversoir et que cet état s'est maintenu au cours de la seconde centrifugation.

Comme le montre la figure 16, on réalise une rotation de 90° du boitier (1) sur lui-même. Les conduits capillaires (51) et (41) se trouvent alors parallèles à la direction de la force centrifuge, mais par une troisième centrifugation seul le réactif (45) peut être chassé vers le déversoir (20) et la cuve d'analyse (11). Le réactif (45) est dévié par la nervure (22) vers la cuve (11) et ne risque pas de pénétrer dans la chambre (50). Le réactif (65) passe de l'alvéole (62) à l'alvéole (60) qui est en communication avec le déversoir (20).

Comme cela apparaît dans la figure 17, on effectue une nouvelle rotation de 90° du boitier autour de son axe. La direction du capillaire (51) est telle que seul le réactif (65) peut être chassé vers le déversoir (20) par une quatrième centrifugation (voir figures 18 et 19).

Enfin, on réalise une dernière rotation de 90° du boitier (1) autour de son axe et plaçant le conduit capillaire (51) de façon telle qu'une cinquième centrifugation permette de chasser le réactif (55) vers la cuve (11) où l'on obtient alors le mélange (100).

La réaction apparue dans ce mélange peut être observée par tout moyen approprié.

On a décrit un dispositif de mise en oeuvre utilisant quatre réactifs liquides, mais certaines réactions ne nécessitent qu'un, deux ou trois réactifs ; certaines des chambres de stockage de réactif peuvent rester vides. Selon une autre variante, on peut prévoir plusieurs types de boitiers contenant des nombres de chambres de stockage différents.

On pourra, sans sortir du cadre de l'invention, remplacer tout moyen par un moyen équivalent.

REVENDICATIONS

1/ Procédé destiné à réaliser l'analyse médicale d'un échantillon liquide (15) à l'aide d'au moins un réactif liquide, caractérisé par le fait qu'il utilise un boitier (1) compartimenté intérieurement de façon à présenter :

- une chambre de stockage (4) pour ledit échantillon liquide (15) reliée par un conduit capillaire (5)à une extrémité d'une cellule calibrée (6) dont l'autre extrémité est reliée par un conduit capillaire (7) à une chambre de trop-plein (8).

+ plusieurs chambres de stockage (30,40,50,60,62) pour des réactifs liquides disposées autour d'un déversoir (20), ledit déversoir étant relié respectivement par des conduits capillaires (31,41,51,61) d'orientations diverses à ladite cellule calibrée (6) et auxdites chambres de stockage de réactif (30,40,50,60,62), et communiquant par ailleurs avec une cuve d'analyse (11), ledit boitier (1) étant fermé par un couvercle (2) muni d'une part d'un réceptacle de stockage (3) d'échantillon communiquant directement avec ladite chambre de stockage (4) d'échantillon et situé au-dessus d'elle, et d'autre part d'un bouchon amovible (13) entrant dans ledit déversoir (20) pour obturer les extrémités desdits conduits capillaires (31, 41,51,61) qui y aboutissent, et par le fait que des moyens sont prévus pour positionner ledit boitier (1) sur le plateau d'une centrifugeuse selon plusieurs positions déterminées se déduisant l'une de l'autre par une rotation du boitier sur lui-même, par rapport au plateau, selon un angle donné, procédé selon lequel on dispose initialement des réactifs liquides (35,45,55,65) dans lesdites chambres de stockage de réactif (30,40,50,60,62), on introduit ledit échantillon (15) dans ledit réceptacle de stockage (3) d'échantillon, ce dernier s'écoulant alors par gravité dans ladite chambre de stockage (4) d'échantillon, on enlève ledit bouchon (13), on met en place ledit boitier (1) sur ledit plateau de la centrifugeuse en vue de réaliser successivement plusieurs centrifugations, la position angulaire du boitier (1) étant à chaque fois choisie, parmi lesdites positions déterminées, en fonction de l'orientation du conduit capillaire concerné par rapport à la direction de la force centrifuge, de manière à faire passer successivement ledit échantillon (15) de ladite chambre de stockage d'échantillon (4) dans ladite cellule calibrée (6), puis de cette dernière dans ledit déversoir (20) et dans ladite cuve d'analyse (11), et ensuite chaque réactif (35,45,55,65) de sa chambre de stockage dans ledit déversoir (20) et ladite cuve d'analyse (11).

2/ Procédé selon la revendication 1, caractérisé par le fait que lesdites positions déterminées du boitier (1) se déduisent les unes des autres par des rotations de l'ordre de 90° et de 180°, correspondant sensiblement aux angles que font entre eux lesdits conduits capillaires (31,41,51,61) aboutissant dans ledit déversoir (20).

3/ Dispositif pour la mise en oeuvre du procédé selon l'une des revendications 1 et 2, caractérisé par le fait qu'il comprend un boitier unitaire (1) en matière plastique venu de moulage, fermé par un couvercle (2) unitaire en matière plastique venu de moulage, ledit boitier (1) étant compartimenté intérieurement de façon à présenter :

- une chambre de stockage (4) pour ledit échantillon liquide (15) reliée par un conduit capillaire (5) à une extrémité d'une cellule calibrée (6) dont l'autre extrémité est reliée par un conduit capillaire (7) à une chambre de trop-plein (8) ;

- plusieurs chambres de stockage (30,40,50,60,62) pour des réactifs liquides (35,45,55,65) disposées autour d'un déversoir (20), ledit déversoir (20) étant relié respectivement par des conduits capillaires (31,41, 51,61) d'orientations diverses à ladite cellule calibrée (6) et auxdites chambres de stockage de réactif (30,40,50,60), et communiquant par ailleurs avec une cuve d'analyse (11), ledit couvercle (2) étant muni d'une part d'un réceptacle de stockage (3) d'échantillon communiquant directement avec ladite chambre de stockage d'échantillon (4) et situé au-dessus d'elle, et d'autre part une cheminée (12) située au-dessus dudit déversoir (20) et destinée à recevoir un bouchon (13) susceptible d'obturer tous les orifices débouchant dans ledit déversoir (20).

4/ Dispositif selon la revendication 3, caractérisé par le fait que ledit boitier (1) est plat et cylindrique, que son diamètre est de l'ordre de trois centimètres, et que lesdits conduits capillaires (5,7,10,31,41,51,61) ont un diamètre de l'ordre de deux dizièmes de millimètres.

5/ Dispositif selon l'une des revendications 3 et 4, caractérisé par le fait que lesdites chambres de stockage de réactif (30,40,50,60,62) contiennent respectivement des réactifs liquides (35,45,55,65).

## FIG.1

FIG.2

FIG.3

FIG.4

FIG.5

## FIG.6

## FIG.7

## FIG.8

# FIG.9

# FIG.10

# FIG.11

# FIG.12

# FIG.13

# FIG.14

0180528

## FIG.15

## FIG.16

## FIG.17

## FIG.18

## FIG.19

## FIG.20